# FASCICULE DE BREVET EUROPEEN

(11) **EP 0 845 679 B1**
(45) Date de publication et mention de la délivrance du brevet: **24.03.2004**
(21) Numéro de dépôt: 97402388.9
(22) Date de dépôt: 10.10.1997
(51) Int. Cl.: G01R 31/28, G01K 15/00, G01D 18/00

(54) **Simulateur portable pour sonde bathymétrique**
Tragbarer Simulator für bathymetrische Sonde
Portable simulator for bathymetric probe

(30) Priorité: 28.11.1996 FR 9614573
(43) Date de publication de la demande: 03.06.1998
(73) Titulaire: ETAT FRANCAIS représenté par le Délégué Général pour l'Armement, F-00460 Armées (FR)
(72) Inventeur: Pipet, Alain, 29140 Melgven (FR)
(74) Mandataire: Jacobson, Claude

(56) Documents cités:
- EP-A- 0 010 762
- US-A- 3 611 276
- US-A- 4 041 382
- US-A- 4 518 915

## Description

L'invention concerne un simulateur de sonde bathymétrique portable.

Le sondage constitue l'une des méthodes d'acquisition des données sur l'environnement aquatique utilisée sur les bâtiments de la Marine Nationale Française. Différents types de sondes sont lancées et, étant reliées par un câble fin au bateau ou au sous-marin, elles délivrent des informations qui sont recueillies sur une carte électronique située dans un ordinateur de type PC. Ces sondes, construites par la société Sippican permettent de déterminer la température de l'eau (sondes thermométriques XBT) ou la vitesse de propogation du son dans l'eau (sondes célérimétriques XSV).

Les sondes XBT sont en fait constituées d'une résistance dont la valeur varie en fonction de la température.

Les sondes XSV, constituées d'un générateur, délivrent une tension dont la fréquence est inversement proportionnelle à la célérité du son dans l'eau.

Le tir de sondes a pour but la prédiction et la détection de sous-marins ou de bâtiments de surface par la mesure de la vitesse du son dans l'eau ou par la mesure de la température de l'eau.

Le tir de sondes est réalisé en deux temps. Lors d'une première étape, les sondes sont chargées dans un lanceur et un signal de contact de sonde chargée est émis. Dans une deuxième étape, elles détectent la surface de l'eau;un signal de contact de sonde lancée est alors émis, puis elles commencent à donner des informations.

Ces sondes jetables sont d'un prix relativement élevé et un nombre important de sondes doit souvent être lancé lors d'exercices de lutte anti-sous-marine.

L'utilisation d'un simulateur de sondes est d'un grand intérêt et évite les lancements inutiles de sondes;le simulateur permet en effet le test instantané du matériel ou du logiciel de l'installation

Mais toutes les réalisations antérieures de simulateurs de sondes sont d'une taille importante et ne permettent de simuler qu'un seul type de sonde (XBT ou XSV). De plus, elles ne peuvent réaliser que des séquences tronquées de tirs de sondes.

US 4 518 915 A divulgue un simulateur portable pour sondes bathymétriques selon le préambule de la revendication 1.

L'invention a donc pour but la réalisation d'un simulateur portable permettant de simuler la séquence intégrale d'un tir d'une sonde ainsi que la réception des données des sondes célérimétriques ou thermométriques lancées en mer par les bâtiments de la Marine Nationale Française équipées d'un sonar ou par des bâtiments hydrographiques.

L'invention a pour objet un simulateur portable pour sondes bathymétriques de type thermométrique ou célérimétrique connecté en sortie sur une carte d'acquisition, selon la revendication 1.

Des modes de réalisation préférentiels sont décrits dans les revendications dépendantes.

Le simulateur portable selon l'invention permet la simulation d'une séquence complète d'un tir de sonde réel : charge d'une sonde dans le canon puis lancement de la sonde.

Le simulateur portable selon l'invention est facilement connectable et permet le test dans la gamme complète des valeurs possibles de l'acquisition en température ou en célérité : entre 1,5° et 36° Celsius pour une stimulation de température et entre 1430 m/s et 1560 m/s pour une simulation de célérité.

Le fait de pouvoir balayer la plage entière permet, de plus la validation des algorithmes de réduction de courbes. Enfin, une position d'étalonnage (1,52 ° Celsius) est prévue pour le test des sondes de températures afin de diagnostiquer un défaut de mise à la masse sur le circuit électrique du bâtiment.

D'autres caractéristiques et avantages de la présente invention apparaitront à la lecture de la description suivante d'un mode de réalisation préférentiel, donné à titre illustratif et non limitatif, et des figures annexées parmi lesquelles :

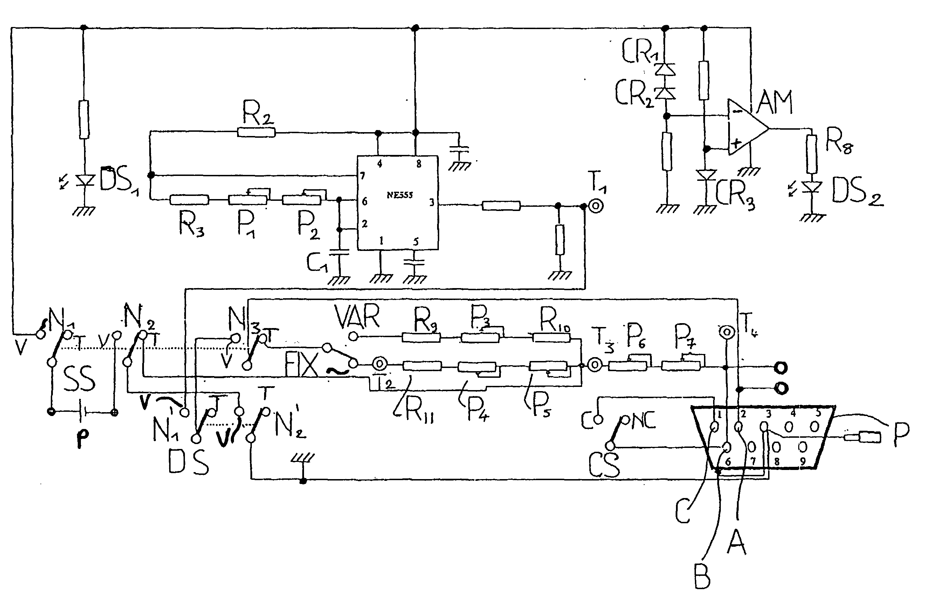

- la figure 1 représente le schéma électrique du simulateur de sonde bathymétrique selon l'invention.

Toute séquence de tir d'une sonde thermométrique ou célérimétrique est précédée de 2 temps : chargement de la sonde et détection de surface. La simulation inclut ces deux temps.

Le simulateur comporte au moins quatre circuits, qui ont respectivement les fonctions suivantes :
- sélection d'un type de sonde (thermométrique ou célérimétrique) et mise en place d'une séquence de tir;
- génération d'un signal périodique de fréquence variable pour la simulation d'une sonde de type célérimétrique;
- génération d'une variation de température pour la simulation d'une sonde thermométrique;
- détection d'un seuil de tension d'alimentation.

Le circuit de sélection d'un type de sonde et de mise en place d'une séquence de tir comprend trois boucles commutables par des commutateurs, qui sont référencés : "SS", "CS", "DS", et qui ont respectivement les trois fonctions suivantes : sélection d'un type de sonde, chargement de la sonde et détection de surface par la sonde.

Le commutateur SS est à trois niveaux et deux positions (V, T), la position V correspondant à la simulation d'une sonde de type XSV, la position T à la simulation d'une sonde de type XBT.

Le premier niveau N1 permet, sur la position V, d'alimenter à la tension de + 9 Volt à partir d'une pile P les circuits de génération de fréquences et de détection de seuil.

Le deuxième niveau N2 de ce commutateur permet, sur la position V, de placer le potentiel négatif de la pile sur l'entrée du commutateur de détection de surface DS. La position T-permet de mettre à la niasse un point de test T3.

Le troisième niveau N3 permet de récupérer des données arrivant sur un point "A" correspondant sur la figure à la broche 2 d'une prise P de type DB9;ces données peuvent être interprétées par une carte d'acquisition analogique de type Sippican MK12.

La sélection de sonde étant faite, il faut mettre en place une séquence de tir. Deux étapes sont nécessaires : simuler premièrement une présence de sonde et deuxièmement une détection de surface.

Le commutateur de chargement de sonde CS permet de simuler la charge de la sonde;il a deux positions (C pour chargée, NC pour non chargée). Avant de commencer tout tir, le commutateur de chargement de sonde CS est en position NC.

La présence de sonde est simulée par la position C du commutateur de chargement de sonde CS, ce qui se traduit électriquement par un contact entre un point "C" correspondant à la broche 1 de la prise P et un point "B" correspondant à la broche 6 de la prise P.

La détection de surface est simulée par une commande du commutateur de détection de surface DS, qui présente deux niveaux.

Son fonctionnement dans un premier niveau N'1 est le suivant.

Lorsqu'une sonde de type XSV arrive à la surface de l'eau, elle commence à délivrer une tension alternative. Le pôle négatif de la pile se retrouve au potentiel 0 Volts. Electriquement, pour une simulation de sonde XSV, le point "A" est soumis à une tension alternative de fréquence. Un point de test T1 est mis à la masse.

Pour une simulation de sonde XBT, le point "A" est commuté sur le circuit de variation de résistance;le point T3 défini plus haut se retrouve à la masse qui correspond à la broche 3 de la prise P et l'acquisition peut alors commencer.

Pour les deux types de sondes, la boucle de détection de surface permet une mise à la masse d'éléments du circuit.

Un deuxième niveau N'2 du commutateur de détection de surface ne sert que pour mettre la sortie du générateur de fréquences vers le point "A" de l'entrée de la carte d'acquisition analogique pour une acquisition en célérité.

Le simulateur de sonde de température selon l'invention peut fonctionner en mode fixe ou en mode variable grâce à l'action d'un commutateur FV à deux positions référencées sur la figure "fix" pour le mode fixe et "var" pour le mode variable.

Le circuit en mode fixe permet la simulation d'une température d'étalonnage de 1,52° Celsius. Il fait intervenir une résistance fixe R11 (10 Kohms) et deux résistances variables de précision ou potentiomètres P4 et P5 (20 ohms/25 tours) en série avec la première.

Le circuit en mode variable permet une acquisition en température entre 1,5 ° et 36° Celsius. Il fait intervenir deux résistances fixes R9 et R10 de même valeur (10 Kohms) et une résistance variable de précision P3 (10 Kohms/10 tours) en série. Les circuits en mode fixe et en mode variable sont connectés au point "B" de la prise P par l'intermédiaire de deux points test T3 et T4 reliés entre eux par deux résistances variables de précision en série P6 (10 Kohms/25 tours) et P7 (20 ohms/25 tours)

Les valeurs des résistances variables sont réglées de façon à obtenir une résistance de 15115 Kohms +/- 0.01% entre deux points de test T2 et T3, le commutateur de sélection de sonde SS étant positionné sur V. Le réglage fin se fait à l'aide du potentiomètre P5. Il est alors nécessaire de régler les résistances P6 et P7 pour obtenir une résistance de 10 Kohms +/- 0,01% entre les points tests T3 et T4.

Pour la simulation d'une célérité, la génération d'un signal périodique de fréquence variable comprise entre 212 et 227 Hertz, imitant la présence d'un sous-marin ou d'un bâtiment de surface est réalisée par un circuit intégré de type NE 555 fonctionnant en multivibrateur astable.

Un condensateur CI de 100 nF se charge au travers d'une résistance R2 (220 ohms) et d'une association en série d'une résistances R3 (20 Kohms) et de deux résistances variables P1 (2 Kohms/10 tours) et P2 (10 Kohms/25 tours);la période du signal est T = -log(1/3)*(R2+R3+P1+P2)*C1.

La fréquence centrale est obtenue par ajustement de la résistance P2. L'utilisateur peut modifier la fréquence par action de l'hélipot P1. Avec les valeurs précitées, un signal périodique d'une durée de 4,54 milleseconde peut être émis en sortie. Le réglage de la fréquence centrale de 220 Hertz se fait par la mesure du signal à l'aide d'un oscilloscope ou d'un fréquencemètre branché entre le point de test T1 et la masse. Un point diviseur de tension permet de diminuer la différence de potentiel à 500 mV crête à crête de façon à ne pas risquer d'endommager la carte d'acquisition permettant ainsi de rester dans les valeurs préconisées par le constructeur de la carte.

Les valeurs des résistances variables P1 et P2 sont modifiées de façon à obtenir sur la sortie du circuit intégré un signal de fréquence de 220 Hertz. Pour cela, l'opérateur visualise le signal de sortie à l'aide d'un oscilloscope de façon à mesurer un créneau d'une durée de 4,545 milliseconde.

Le circuit de détection de seuil permet de repérer si la pile est usagée. Il comporte un amplificateur AM monté en comparateur. Son entrée positive est reliée à une diode CR3 montée en direct et voit donc son potentiel fixé à la tension de seuil de la diode. L'entrée négative du comparateur est référencée par 2 diodes Zéner CR1 et CR2 assurant un potentiel égal à la tension d'alimentation moins la tension inverse des diodes Zéner. Si la tension sur l'entrée négative est inférieure à celle arrivant sur l'entrée positive, le comparateur bascule.

La tension aux bornes d'une résistance R8 est égale à la tension d'alimentation diminuée des 2 tensions opposées des diodes Zéner CR1 et CR2.

Dès que la tension d'alimentation devient faible, les diodes Zéner sont non passantes;la tension sur l'entrée est alors voisine de 0 et donc inférieure à la tension de seuil de la diode CR3. Il y a alors basculement du comparateur.

Les tensions inverses des diodes CR1 et CR2 sont respectivement 4,7 V et 3,6 V. La valeur de la tension de seuil de la diode CR3 est 0,6 V.

Si la tension d'alimentation est de 9 V, la tension aux bornes de la résistance R8 (tension d'alimentation diminuée des deux tensions inverses) est 0,7 V. Il n'y a pas de basculement du comparateur et une diode DS1 s'éclaire.

Si la tension d'alimentation est inférieure ou égale à 8,9 V, la tension aux bornes de la résistance R8 est inférieure ou égale à 0,6 V;il y a basculement du comparateur et une diode DS2 s'éclaire.

La sortie du simulateur de sonde selon l'invention est connectée sur la carte d'acquisition analogique, soit directement au travers d'un câble adapté à une fiche de type DB9, soit par l'intermédiaire d'un boîtier lanceur de sonde déjà installé sur les sous-marins au travers d'un câble plat spécial.

## Revendications

1. Simulateur portable pour sondes bathymétriques de type thermométrique ou célérimétrique connectable en sortie (P) sur une carte d'acquisition comprenant au moins les circuits suivants :
a) un circuit de génération d'une variation de température pour la simulation d'une sonde thermométrique,
b) un circuit de détection d'un seuil de tension d'alimentation,
**caractérisé en ce que** le simulateur portable comprend en plus
c) un circuit de sélection d'un type de sonde thermométrique ou célérimétrique (SS) et de mise en place d'une séquence de tir (CS, OS),
d) un circuit de génération d'un signal périodique de fréquence variable pour la simulation d'une sonde de type célérimétrique,
les circuits d et a présentant une section commune pouvant aboutir à une entrée de la carte d'acquisition.

2. Simulateur portable pour sondes bathymétriques de type thermométrique ou célérimétrique selon la revendication 1, **caractérisé en ce que** le circuit c de sélection et de mise en place d'une séquence de tir de sonde comporte trois boucles commutables, qui ont respectivement les fonctions suivantes : sélection d'un type de sonde (SS), chargement de la sonde (CS) et détection de surface par la sonde (DS).

3. Simulateur portable pour sondes bathymétriques de type thermométrique ou célérimétrique selon la revendication 2, **caractérisé en ce que** la boucle de sélection d'un type de sonde (SS) comporte trois niveaux, qui correspondent pour le premier à l'alimentation des circuits b et d, pour le deuxième à la mise à la masse de points des circuits d et a, pour le troisième au branchement sur l'entrée de la carte d'acquisition.

4. Simulateur portable pour sondes bathymétriques de type thermométrique ou célérimétrique selon la revendication 2 ou 3, **caractérisé en ce que** la boucle de détection de surface (DS) est à deux niveaux, correspondant pour le premier à la mise à la masse de points des circuits d et a, pour le deuxième au branchement sur l'entrée de la carte d'acquisition.

5. Simulateur portable pour sondes bathymétriques de type thermométrique ou célérimétrique selon l'une des revendications 1 à 4, **caractérisé en ce que** le circuit d de génération d'un signal périodique de fréquence variable comprend un circuit intégré (C11) fonctionnant en multivibrateur astable.

6. Simulateur portable pour sondes bathymétriques de type thermométrique ou célérimétrique selon l'une des revendication 1 à 5, **caractérisé en ce que** le circuit a de génération d'une variation de température comprend au moins une résistance variable de précision (P3).

## Claims

1. Portable simulator for bathymetric probes of the thermometric or celerimetric type which are connectable at the output (P) to an acquisition card comprising at least the following circuits:
a) a circuit for generating a temperature variation for simulating a thermometric probe,
b) a circuit for detecting a supply voltage threshold,
**characterised in that** the portable simulator further comprises
c) a circuit for selecting a type of thermometric or celerimetric probe (SS) and for setting up a firing sequence (CS, OS),
d) a circuit for generating a variable-frequency periodic signal for simulating a celerimetric-type probe,
the circuits d and a having a common section capable of abutting on an input of the acquisition card.

2. Portable simulator for bathymetric probes of the thermometric or celerimetric type according to claim 1, **characterised in that** the circuit c for selecting and setting up a probe firing sequence comprises three switchable loops having the following respective functions: selection of a type of probe (SS), charging of the probe (CS) and surface detection by means of the probe (DS).

3. Portable simulator for bathymetric probes of the thermometric or celerimetric type according to claim 2, **characterised in that** the loop for selecting a type of probe (SS) comprises three levels, the first corresponding to the supply of the circuits b and d, the second to the earthing of points of the circuits d and a and the third to the connection to the input of the acquisition card.

4. Portable simulator for bathymetric probes of the thermometric or celerimetric type according to claim 2 or 3, **characterised in that** the loop for detecting the surface (DS) comprises two levels, the first corresponding to the earthing of points of the circuits d and a and the second to the connection to the input of the acquisition card.

5. Portable simulator for bathymetric probes of the thermometric or celerimetric type according to one of claims 1 to 4, **characterised in that** the circuit d for generating a periodic signal of variable frequency comprises an integrated circuit (C11) operating as an unstable multivibrator.

6. Portable simulator for bathymetric probes of the thermometric or celerimetric type according to one of claims 1 to 5, **characterised in that** the circuit a for generating a variation in temperature comprises at least one high-precision variable resistor (P3).

## Patentansprüche

1. Tragbarer Simulator für bathymetrische Sonden vom Typ Temperaturmessung oder Geschwindigkeitsmessung, der am Ausgang (P) an eine Erfassungskarte anschließbar ist, umfassend mindestens die folgenden Schaltungen:
a) eine Schaltung zur Erzeugung einer Temperaturänderung für die Simulation einer Temperaturmeßsonde,
b) eine Schaltung zur Erfassung einer Versorgungsspannungsschwelle,
**dadurch gekennzeichnet, daß** der tragbare Simulator außerdem umfaßt:
c) eine Schaltung zur Wahl eines Temperaturmessungs- oder Geschwindigkeitsmessungs-Sondentyps (SS) und zum Einsetzen einer Schußsequenz (CS, OS),
d) eine Schaltung zur Erzeugung eines periodischen Signals mit veränderlicher Frequenz für die Simulation einer Geschwindigkeitsmeßsonde,
wobei die Schaltungen d und a einen gemeinsamen Abschnitt aufweisen, der zu einem Eingang der Erfassungskarte führen kann.

2. Tragbarer Simulator für bathymetrische Sonden vom Typ Temperaturmessung oder Geschwindigkeitsmessung nach Anspruch 1, **dadurch gekennzeichnet, daß** die Schaltung c zur Wahl und zur Einsetzung einer Sondenschußsequenz drei umschaltbare Schleifen umfaßt, die die folgenden Funktionen haben: Wahl eines Sondentyps (SS), Laden der Sonde (CS) und Oberflächenerfassung durch die Sonde (DS).

3. Tragbarer Simulator für bathymetrische Sonden vom Typ Temperaturmessung oder Geschwindigkeitsmessung nach Anspruch 2, **dadurch gekennzeichnet, daß** die Schleife zur Wahl eines Sondentyps (SS) drei Stufen umfaßt, deren erste der Versorgung der Schaltungen b und d, deren zweite der Verbindung von Punkten der Schaltungen d und a mit der Masse und deren dritte der Anschließung an den Eingang der Erfassungskarte entspricht.

4. Tragbarer Simulator für bathymetrische Sonden vom Typ Temperaturmessung oder Geschwindigkeitsmessung nach Anspruch 2 oder 3, **dadurch gekennzeichnet, daß** die Schleife zur Oberflächenerfassung (DS) zwei Stufen umfaßt, deren erste der Verbindung von Punkten der Schaltungen d und a mit der Masse und deren zweite der Anschließung an den Eingang der Erfassungskarte entspricht.

5. Tragbarer Simulator für bathymetrische Sonden vom Typ Temperaturmessung oder Geschwindigkeitsmessung nach einem der Ansprüche 1 bis 4, **dadurch gekennzeichnet, daß** die Schaltung d zur Erzeugung eines periodischen Signals mit veränderlicher Frequenz eine integrierte Schaltung (C11) umfaßt, die als astabiler Multivibrator arbeitet.

6. Tragbarer Simulator für bathymetrische Sonden vom Typ Temperaturmessung oder Geschwindigkeitsmessung nach einem der Ansprüche 1 bis 5, **dadurch gekennzeichnet, daß** die Schaltung a zur Erzeugung einer Temperaturänderung mindestens einen veränderlichen Präzisionswiderstand (P3) umfaßt.
